# EUROPEAN PATENT APPLICATION

(11) **EP 1 632 955 A1**
(43) Date of publication of application: **08.03.2006**
(21) Application number: 04732747.3
(22) Date of filing: 13.05.2004
(51) Int. Cl.: G21F 1/08, C22C 21/00, C22C 1/04, B21C 23/00, B21C 23/01, B21C 23/22

(54) **ALUMINUM BASED NEUTRON ABSORBER AND METHOD FOR PRODUCTION THEREOF**

(30) Priority: 13.05.2003 JP 2003134828
(71) Applicant: Nippon Light Metal Company Ltd., Shinagawa-ku, Tokyo 140-8628 (JP); Toyo Aluminium Co., Ltd., Osaka-shi, Osaka 541-0056 (JP); Hitachi Zosen Corporation, Osaka-shi, Osaka 559-8559 (JP)
(72) Inventor: KUSUI, Jun, Toyo Aluminium K.K., Osaka-shi, Osaka 5410056 (JP); ISHII, Hideki, Light Metal Company Ltd., Ihara-gun (JP); OKANIWA, Shigeru, Light Metal Company Ltd., Ihara-gun (JP); INOUE, Atsushi, Tokyo 1408628 (JP); KONDOU, Takutoshi, Nikkei Kambara Company, Ltd, Shizuoka 4213297 (JP); IWASE, Masakazu, Nikkei Niigata Company, Ltd., Niigata-shi, Niigata 9503101 (JP)
(74) Representative: Poulin, Gérard
(86) International application number: PCT/JP2004/006438
(87) International publication number: WO 2004/102586

(57) **Abstract**

An aluminum-based extruded neutron absorber comprising a body portion consisting of an aluminum alloy containing boron or a boron compound including isotopes having the ability to absorb neutrons at a boron content of 20-40% by mass; and a surface layer portion consisting of an aluminum alloy whose boron content is 1% by mass or less, and a production method thereof. An aluminum alloy material is prepared as an extruded material or a can, a boron or boron compound powder is mixed with an aluminum alloy powder, and when using a can, the can is filled with the mixed powder to form a preliminary compact, and when using an extruded material the mixed powder is press-formed to produce a preliminary compact, which is then extruded. A neutron absorber that exhibits excellent neutron absorbing ability, and excels in heat dissipation, workability and weldability is obtained.

## Description

### TECHNICAL FIELD

The present invention relates to an aluminum-based neutron absorber suitable for use, for example, in facilities for storage or transport of spent nuclear fuel and methods for production thereof, and more specifically relates to an improvement in neutron absorbers using an aluminum alloy containing boron or a boron compound with neutron absorbing ability.

### BACKGROUND ART

Nuclear fuel rods can generate fast neutron or thermal neutrons even after they have been spent. Since these neutrons accelerate nuclear reactions, leaving large amounts of nuclear fuel in bulk can cause the neutrons to proceed nuclear reactions. Therefore, when storing or transporting nuclear fuel, it is divided and placed in assemblies of stainless steel square pipes with neutron absorbers welded to their peripheries, these being generally referred to as "baskets". These baskets are housed in containers known as "casks", and transported or stored in that state (see, e.g. Patent Document 1).

Generally speaking, substances with the ability to absorb neutrons mention gadolinium (Gd) and samarium (Sm), but boron (B) is most commonly used for neutron absorbers as described above. As a neutron absorber using boron, a plate-shaped compact known as "boral", consisting of a mixed powder of boron carbide (B₄C) powder and aluminum powder mixed together at a mass ratio of 3:2 sandwiched between two aluminum plates and rolled has been conventionally used. This neutron absorber is welded to square pipes of stainless steel or the like to produce baskets.

Another type of compact used for absorbing neutrons is an aluminum compact for absorbing neutrons obtained by forming a preliminary compact by using mechanical alloying to mix an aluminum powder and a boron or boron compound powder, then extruding the preliminary compact (see, e.g., Patent Document 2).

Another example of a compact used for absorbing neutrons is a neutron absorber produced by dissolving boron into an aluminum alloy (see, e.g., Patent Document 3).

However, in the case of "boral", the fact that the boron compound sometimes does not disperse evenly was pointed out long ago (see Non-Patent Document 1).

Additionally, while the ability to dissipate heat is required because nuclear fuel rods throw off heat, boral has a high proportion of boron carbide and is simply rolled, so that the adhesion between the boron carbide particles themselves and between boron carbide and the aluminum plates is poor, as a result of which it has poor thermal conductivity and little heat dissipating ability. There are cases in which cooling water is passed through the square pipes when storing nuclear fuel, but in this case the poor adhesion between the boron compounds causes water to penetrate inside the boral.

Additionally, with regard to the aluminum alloy compact of the latter, the dispersion of aluminum and boron or boron compounds can be made more even than in boral, but the hardness of boron compounds is next to that of diamond and CDB (cubic boron nitride), so that using this material in a mold can cause extreme wear to tools such as extrusion dice or the like. Additionally, mechanical alloying causes a large number of plastic working distortions in the powder, making it difficult to obtain a compact of high true density by preforming such as cold isostatic pressing (CIP) or solid forming such as hot isostatic pressing (HIP). Even if a compact of high true density is obtained, the problem of surface tearing remains. ln particular, during extrusion, the boron compounds can be a starting point for gouging to occur on the surface of the extruded material. For this reason, it is not possible to increase the concentration of boron. Additionally, the material is high in hardness but brittle, has poor heat dissipation like boral, and is difficult to weld.

Additionally, in neutron absorbers consisting of ingots of boron dissolved in aluminum alloys, it is difficult to dissolve boron, so that the concentration of boron cannot be made higher. Additionally, the aluminum alloy must be heated to at least 800 °C in order to dissolve the boron, thus reducing productivity and tending to damage the melting furnaces.
- Patent Document 1:: Japanese Patent Application, First Publication No. H8-136695
- Patent Document 2:: Japanese Patent Application, First Publication No. 2002-22880
- Patent Document 3:: Japanese Patent Application, First Publication No. 2003-268471
- Non-Patent Document 1:: W. R. Burrus, *Nucleonics,* 16 (1958).

### DISCLOSURE OF THE INVENTION

### Problems to be Solved by the Invention

The present invention has been made in view of the above considerations, and has the primary object of offering an aluminum-based extruded neutron absorber and a production method thereof that partially or completely overcomes the aforementioned problems associated with conventional aluminum-based neutron absorbers.

Another object of the present invention is to offer a neutron absorber and production method thereof wherein the boron or boron compound having neutron absorbing ability is evenly dispersed and consequently exhibits excellent neutron absorbing ability.

A further object of the present invention is to offer an aluminum-based extruded neutron absorber and production method thereof that excels in heat dissipation and/or workability and/or weldability, and/or has no possibility of water penetration.

### Means for Solving the Problems

The aluminum-based extruded neutron absorber according to the present invention is characterized by comprising a body portion consisting of an aluminum alloy containing boron or a boron compound including isotopes having the ability to absorb neutrons at a boron content of 20-40% by mass; and a surface layer portion covering the body portion, consisting of an aluminum alloy whose boron content is 1% by mass or less.

In the aluminum-based extruded neutron absorber of the present invention, the aforementioned surface layer portion is preferably at least 0.1 mm thick, the neutron absorber is preferably plate-shaped, with the thickness of the surface layer portion on the sides of the plate greater than the thickness of the surface layer portion on the top and bottom of the plate, and the B in its interior is preferably contained in the form of B₄C.

Additionally, the aluminum alloy of the body portion may comprise at least one element chosen from the group consisting of silicon (Si), magnesium (Mg), iron (Fe), copper (Cu), manganese (Mn), chromium (Cr), titanium (Ti), nickel (Ni), vanadium (V), cobalt (Co), molybdenum (Mo), niobium (Nb), zirconium (Zr), strontium (Sr) and zinc (Zn), in addition to the aforementioned boron or boron compound, or it may be an Al-B alloy substantially containing no such further elements. When including further elements, the amount should preferably be 2% by mass or less of each element, with a total amount of 15% by mass or less.

Additionally, the aluminum alloy of the surface layer portion may also comprise at least one element chosen from the group consisting of silicon (Si), magnesium (Mg), iron (Fe), copper (Cu), manganese (Mn), chromium (Cr), titanium (Ti), nickel (Ni), vanadium (V), cobalt (Co), molybdenum (Mo), niobium (Nb), zirconium (Zr), strontium (Sr) and zinc (Zn), or it may be pure aluminum substantially containing no such further elements. When including further elements, the amount should preferably be 2% by mass or less of each element, with a total amount of 15% by mass or less.

Furthermore, the boron content of the aforementioned surface layer portion should preferably be 100 ppm or less.

Furthermore, elements other than boron or boron compounds that have the ability to absorb neutrons, especially hafnium (Hf), samarium (Sm) and gadolinium (Gd) can be included in the aluminum alloy of the body portion and/or the aluminum alloy of the surface layer portion, preferably in an amount of 1-50% by mass.

The production method according to the present invention is suitable for producing the aforementioned aluminum-based extruded neutron absorber, and comprises:
(a) a step of preparing an aluminum alloy material whose boron content is 1% by mass or less;
(b) a step of mixing a powder of the aforementioned boron or boron compound with an aluminum alloy powder such as to make the boron content 20-40% by mass to produce a boron-aluminum mixed powder;
(c) a step of extruding the aluminum alloy material and the boron-aluminum mixed powder to form an aluminum-based neutron absorber comprising a body portion consisting of boron-aluminum and a surface layer portion of aluminum alloy covering the body portion; and
(d) in some cases, rolling the extruded aluminum-based neutron absorber.

In a preferred embodiment, the aluminum alloy material is an aluminum alloy container, and the aforementioned step (c) is a step of filling the aluminum alloy container with the boron-aluminum powder to form a preliminary compact, then extruding the preliminary compact to form an aluminum-based neutron absorber.

ln another preferred embodiment, the aforementioned step (c) comprises a step of cold isostatic pressing or cold pressing the boron-aluminum mixed powder to form a pressed compact; and a step of arranging the aluminum alloy material and the boron-aluminum powder pressed compact in order in the direction of extrusion, and extruding. The step of extruding the aluminum powder pressed compact may be preceded by degassing or sintering.

Additionally, in one embodiment, it is preferable for the boron-aluminum mixed powder to be formed in the aforementioned step (b) by mixing a boron compound powder having an average particle size in the range of 3-30 µm with an aluminum alloy powder having an average particle size in the range of 20-50 µm.

While there are no restrictions on the nuclear facilities and equipment for which the neutron absorber of the present invention is to be used, it is suitable for use in facilities for storage and transport of spent nuclear fuel. Thus, the present invention particularly offers a basket for storing used nuclear fuel, wherein the basket is formed by affixing the aforementioned aluminum-based neutron absorbers to the wall portions forming the space for accommodating the aforementioned nuclear fuel.

### Effects of the Invention

The aluminum-based neutron absorber and its production method according to the present invention partially or completely overcome the aforementioned problems associated with conventional aluminum-based neutron absorbers and their production methods.

ln particular, the aluminum-based neutron absorber according to the present invention has a body portion formed by mixing a powder of boron or a boron compound with an aluminum alloy powder, extruding and press sintering, thus enabling it to evenly contain large amounts of boron, so that it excels in neutron absorbing ability, and has high adhesion between the boron or boron compound powder and the aluminum powder so there is no risk of water penetration.

Additionally, a surface layer portion consisting of an aluminum alloy substantially containing no boron or boron compounds is provided, so that it excels in heat dissipation and/or workability and/or weldability, and/or there is no risk of water penetration. In a preferred embodiment in particular, tools will not wear down and surface tearing will not occur during preforming or solid forming.

### BEST MODE FOR CARRYING OUT THE INVENTION

Herebelow, the aluminum-based neutron absorber and production method thereof according to the present invention shall be described in detail with reference to the drawings as needed, but the present invention is not limited by these explanations.

The aluminum-based neutron absorber according to the present invention is suitable for use when making a compact to be attached to the periphery of a basket formed from square pipes of stainless steel or the like to support nuclear fuel in casks for storing multiple nuclear fuel rods.

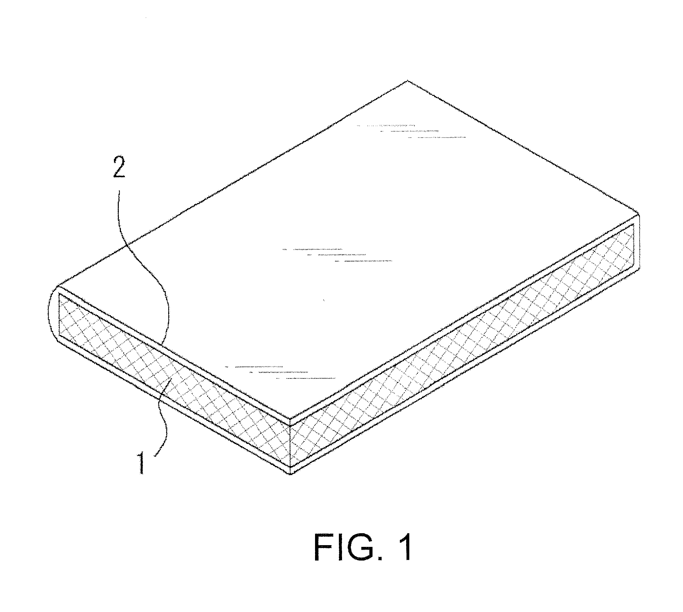

As shown in Fig. 1, the aforementioned neutron absorber is shaped like a rectangular plate overall, has a two-layer structure comprising a body portion 1 having neutron absorbing ability and a surface layer portion covering said body portion 1, the body portion 1 consisting of an aluminum alloy containing boron or boron compounds including isotopes having the ability to absorb neutrons in an amount of 20-40% by mass in boron content, and the surface layer portion consisting of an aluminum alloy whose boron content is held to 1% by mass or less.

The aluminum alloy of the body portion 1, in one embodiment, is pure aluminum when the composition is observed after removing the boron or boron compounds, and in another embodiment, is an aluminum alloy containing further elements in the composition even after the boron or boron compounds have been removed, and a powdered raw material is used for their formation. On the other hand, there is no particular need to prepare a powdered raw material for the aluminum alloy or pure aluminum of the surface layer portion 2. Additionally, the composition of the aluminum alloy of the body portion 1 with the boron or boron compounds removed can be identical to or different from the composition of the aluminum alloy of the surface layer portion 2.

Herebelow, the production of the neutron absorber of the present invention will be explained in the order of the raw materials and the production steps.

### (1) Aluminum Alloy Powder of Body Portion

There are no particular limitations on the composition of the aluminum alloy powder mixed with the boron or boron compound powder, and it is possible to use powders of various types of alloys such as pure aluminum (such as JIS1070), Al-Cu alloys (such as JIS2917), Al-Mg alloys (such as JIS5052), Al-Mg-Si alloys (such as JIS6061), Al-Zn-Mg alloys (such as JIS7075) and Al-Mn alloys, either alone or as a mixture of two or more types.

The composition of the aluminum alloy powder is selected by taking into consideration the desired properties, deformation resistance during later molding, amount of boron or boron compounds to be mixed, the raw material cost, and the like. For example, a pure aluminum powder is preferable when wishing to improve the workability or heat dissipation of the neutron absorber. Pure aluminum powders are also better than aluminum alloy powders in terms of raw material cost. The pure aluminum powders should preferably have a purity of at least 99.5% by mass (commercially available pure aluminum powders usually have a purity of at least 99.7% by mass).

Additionally, if the amount of the mixed aluminum boron or boron compound powder is large, then it is easier to work if aluminum alloy powders of low strength are used.

Furthermore, when wishing to increase the neutron absorbing ability, it is possible to add at least one element having neutron absorbing ability such as Hf, Sm or Gd, preferably in an amount of 1-50% by mass. Additionally, when requiring high-temperature strength, it is possible to add at least one of Ti, V, Cr, Mn, Fe, Co, Ni, Mo, Nb, Zr, Sr or the like, and when requiring room-temperature strength, it is possible to add at least one of Si, Cu, Mg, Zn or the like, at a proportion of 2% or less per element, up to a total amount of 15% by mass.

ln the aforementioned aluminum alloy powder, the remaining portions other than the specified components basically consist of aluminum and unavoidable impurities.

While there is no particular limitation on the average particle size of the aluminum alloy powder, the upper limit should generally be 500 µm or less, preferably 150 µm or less, and more preferably 50 µm or less. While there is no particular limitation on the lower limit of the average particle size, it should generally be at least 1 µm, preferably at least 20 µm. Whereas the difference from the average particle size of the boron or boron compound powders to be described below should preferably be small because cracks tend to occur during plastic working such as extrusion or rolling when there is a large difference in average particle sizes, the average particle size of the aluminum alloy powder is preferably as described above because if the average particle size is too large, it becomes difficult to mix evenly with the boron or boron compound powders whose average particle size cannot be increased, and if the average particle size is too small, the fine aluminum alloy powders can clump together, making it extremely difficult to mix evenly with the boron or boron compound powders. Additionally, it is possible to obtain better workability, moldability and mechanical properties by setting the average particle sizes within this range.

In the above, the average particle sizes refer to values obtained by a laser diffraction type particle size distribution measuring method. The shape of the powder is also not limited, and can be teardrop-shaped, spherical, ellipsoidal, flake-shaped or irregular.

There is no limitation on the method for producing the aforementioned aluminum alloy powder, which can be produced according to known methods of producing metallic powders. The production method may, for example, be by atomization, melt spinning, rotating disc, rotating electrode or other rapid-cooling solidification process, but for industrial production, it is preferable to use an atomization process, especially a gas atomization process wherein a powder is produced by atomization of a melt.

ln the atomization process, the aforementioned melt should preferably be atomized after heating to 700-1200 °C. This is because setting to this temperature range allows for more effective atomization. Additionally, while the spray medium and atmosphere for atomization may be air, nitrogen, argon, helium, carbon dioxide, water or a mixture thereof, the spray medium should preferably consist of air, nitrogen gas or argon gas for economical reasons.

### (2) Boron or Boron Compound Powder of Body Portion

Examples of boron or boron compounds capable of being used to form the body portion include B, B₄C, TiB₂, B₂O₃, FeB, FeB₂ and the like, these being capable of being used alone or as a mixture. ln particular, it is preferable to use boron carbide B₄C which contains large amounts of B10 which is an isotope of B that is good at absorbing neutrons.

This boron or boron compound is added to the aforementioned aluminum alloy powder in an amount of at least 20% by mass and at most 40% by mass in boron content. The reason the amount must be at least 20% by mass is that a sufficient neutron absorbing ability cannot be obtained if less than 20% by mass, thus requiring the neutron absorber to be made thick in order to obtain adequate neutron absorbing ability, so that not only does it become impossible to accommodate the neutron absorber in a limited space, but the material becomes bulky. Additionally, the amount must not exceed 40% by mass because if greater than 40% by mass, the deformation resistance becomes high at the time of extrusion, making extrusion difficult, as well as making the extruded materials brittle and easily broken. Additionally, the adhesion between aluminum and boron compounds is made poor, tending to form gaps and reducing heat dissipation.

While the average particle size of the boron or boron compound powder is arbitrary, the difference in particle sizes between the two types of powders should preferably be small as explained above in connection with the average particle size of the aluminum alloy or pure aluminum powder. Consequently, while the average particle size of the boron or boron compound will change according to the average particle size of the aluminum alloy or pure aluminum powder, it should preferably be at least 3 µm and at most 30 µm, preferably at least 5 µm and at most 10 µm. lf the average particle size exceeds 30 µm (preferably 10 µm), the saws used for cutting wear down quickly, and if the average particle size is less than 3 µm (preferably 5 µm), the fine powder can clump together, making it extremely difficult to mix evenly with the aluminum powder.

As described above, the average particle size described above refers to values obtained by laser diffraction type particle size distribution measurement. The shapes of the powders are also not limited, and can be teardrop-shaped, spherical, ellipsoidal, flake-shaped or irregular.

### (3) Aluminum Alloy Material of Surface Layer Portion

The composition of the aluminum alloy material of the surface layer portion is not particularly restricted, and various types of alloy materials such as pure aluminum (such as JIS1070), Al-Cu alloys (such as JIS2017), Al-Mg alloys (such as JIS5052), Al-Mg-Si alloys (such as JIS6061), Al-Zn-Mg alloys (such as JIS7075) and Al-Mn alloys can be used.

The composition of the aluminum alloy can be selected in consideration of the desired properties, cost and the like. For example, pure aluminum is preferable when wishing to increase the workability and heat dissipation of the neutron absorber. Pure aluminum is better than aluminum alloys in terms of the raw material cost. Furthermore, when wishing to increase the neutron absorbing ability, it is possible to add at least one element having neutron absorbing ability such as Hf, Sm or Gd, preferably in an amount of 1-50% by mass. Additionally, when requiring high-temperature strength, it is possible to add at least one of Ti, V, Cr, Mn, Fe, Co, Ni, Mo, Nb, Zr, Sr or the like, and when requiring room-temperature strength, it is possible to add at least one of Si, Cu, Mg, Zn or the like, at a proportion of 2% or less per element, up to a total amount of 15% by mass.

In the aforementioned aluminum alloy, the remaining portions other than the specified components basically consist of aluminum and unavoidable impurities.

Additionally, since the surface layer portion directly affects the workability and weldability, its composition should be suitable in terms of the workability and weldability. ln particular, the workability and weldabiltiy are better if the boron content is lower, so the boron content of the surface layer portion should be as low as possible. Therefore, it should preferably be 100 ppm or less.

Furthermore, while the aluminum alloy material of the surface layer portion is sometimes provided in the form of a can and lid as described below, in that case, it is preferable to use an aluminum alloy with low deformation resistance and high thermal conductivity, and pure aluminum is especially preferred.

### (4) Neutron Absorber Production Steps

The production method of the present invention comprises (a) a step of preparing the aluminum alloy material of the surface layer portion, (b) a step of producing the boron-aluminum mixed powder of the body portion, (c) an extruding step, and (d) an optional rolling step, and can be divided into a first embodiment where a material in the form of a can of aluminum alloy is prepared in the above step (a) and extrusion is performed with this can filled with a boron-aluminum mixed powder, and a second embodiment where an aluminum alloy material is prepared in a form appropriate for extrusion in the above step (a), and the boron-aluminum mixed powder is formed into a press sintered compact, and the aluminum alloy or pure aluminum material and the boron-aluminum mixed sintered compact are extruded in step (c). Herebelow, each embodiment will be separately explained.

### First Embodiment

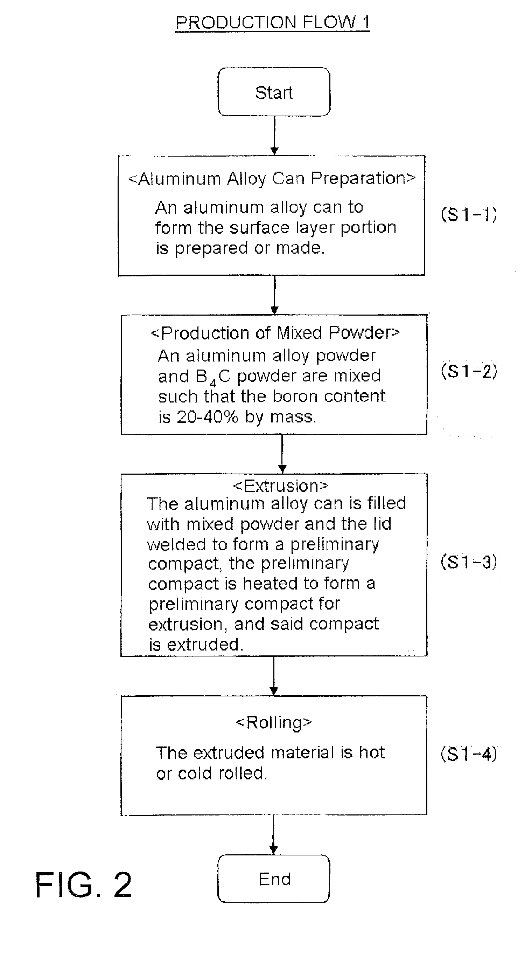

The method for producing a neutron absorber according to this embodiment is performed in accordance with the flow chart shown in Fig. 2.

### Preparation of Aluminum Alloy Can (Step S1-1):

The aluminum alloy material to form the surface layer portion may be prepared by preforming in the shape of a can and lid, or made as appropriate according to conventional methods. The thickness of the can should be about 1-10 mm, preferably about 4-6 mm, and should preferably have enough strength to endure transport. The lid may be of the same material or a different material from the can, and should have at least one pore to allow gas to escape during extrusion. Since the lid will mainly be the surface layer portion of the neutron absorber, it should preferably be made thicker than the can, for example, about 5-70 mm, preferably about 10-40 mm. If the lid is less than 5 mm thick, it will not be able to adequately cover the body portion. Conversely, if thicker than 70 mm, it will be selectively consumed during the initial stages of extrusion, thus forming an extruded material not containing much of the body portion inside, so that it essentially cannot be used to mold a surface layer portion, and reduces yield.

It is also possible to provide pores of a size that will not allow leakage of the mixed powder in the can instead of or in addition to the lid.

### Production of Boron-Aluminum Mixed Powder (Step S1-2):

An aluminum alloy powder and a powder of boron or boron compound such as B₄C with a boron content of at least 20% by mass and at most 40% by mass are prepared, and these powders are mixed even. The method of mixture may be a publicly known method, for example, using various types of mixers such as a V blender or cross rotary mixer, a vibrating mill, a planetary mill or the like, with a predetermined mixing time (for example, from about 10 minutes to 6 hours). Additionally, the mixing can be performed wet or dry. Additionally, media such as alumina balls or the like can be added as appropriate for the purposes of crushing during the mixing process.

### Extrusion (Step S1-3):

First, the mixed powder obtained in the previous step is loaded into the aforementioned aluminum alloy can, for example, into an aluminum can. Next, gas around the powder is removed by applying vibrations, then the lid is welded to prevent the powder from leaking during transport, thereby producing a preliminary compact.

Here, it is preferable for the relative density of the mixed powder injected into the aluminum alloy to be generally about 50-80% in order to make extrusion easier. The relative density of this mixed powder can be appropriately adjusted by changing the fill rate by applying vibrations or the like when filling the aluminum alloy can with the mixed powder. The thickness of the aluminum alloy can should be about 1-10 mm, preferably about 4-6 mm, and should have enough strength to withstand transport. A thick can-shaped material should preferably be used to make transport easier.

If needed, a degassing process may be performed by evacuation or the like. ln the case of evacuation, the vacuum should be, for example, about 0.1 torr. While the degassing process can be performed at standard temperature, the degassing can be improved by heating to 200-400 °C.

Next, this preliminary compact for extrusion can be heated preferably to 350-600 °C immediately prior to extrusion. The heating is required to sufficiently raise the temperature inside the mixed powder in order to enable the extrusion to be performed smoothly. The atmosphere used for heating is not particularly restricted, and can be set to air or a non-oxidizing atmosphere (such as nitrogen gas, argon gas or vacuum). The heating time can be appropriately set depending on the size of the preliminary compact for extrusion, but should generally be about 0.5-30 hours.

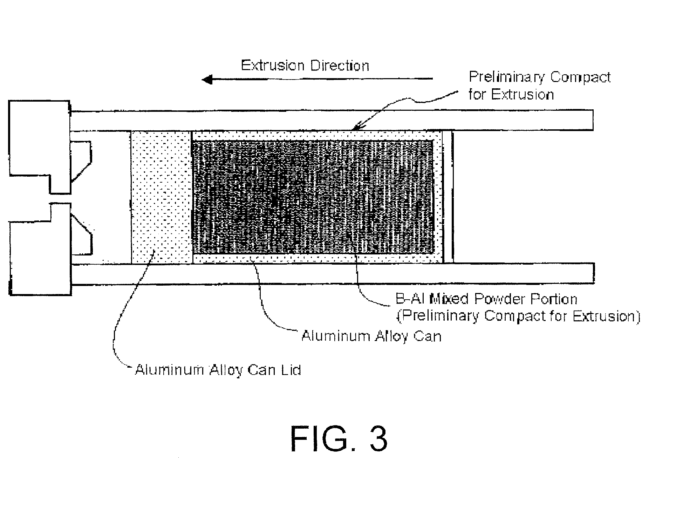

Next, the preliminary compact for extrusion is quickly transported to the extruder, and as shown in Fig. 3, the aluminum alloy can is arranged in the extruder with the lid side of the can facing the direction of extrusion, and extruded to form an extruded material. Here, the extrusion conditions, for example, when using a direct extruder as an extruder, should preferably be such that the extrusion speed is 0.3-5 m/minute and the heating temperature is 530-560°C.

By extruding an aluminum alloy can filled with a boron-aluminum mixed powder, the aluminum alloy can directly contacts the dice, and the can acts as a lubricant to allow extrusion of materials containing high concentrations of boron or boron compound powders as in the present invention. Due to this extrusion, the mixed powder is pressure sintered to form a solidified molded core, with a aluminum alloy surface layer portion formed on the outer surface thereof. In this case, the thickness of the extruded material is, for example, about 6 mm, and the thickness of the surface layer portion is, for example, about 0.1-0.5 mm.

Here, there is no particular restriction on the lower limit for the average thickness of the surface layer portion in the extruded material, but it should preferably be at least 0.1 mm. If made thinner, sufficient weldability and workability cannot be obtained, and there is a risk of problems occurring such as reduced heat dissipation and surface tearing when working. On the other hand, the upper limit for the average thickness of the surface layer portion can be designed as appropriate according to the thickness of the neutron absorber overall, but should preferably be at most 30% of the thickness of the neutron absorber. If the average thickness of the surface layer portion exceeds 30% of the thickness of the neutron absorber, it may be necessary to make the neutron absorber very large in order to obtain sufficient neutron absorbing ability. Additionally, if the surface layer portion is thin, it is preferable to reduce the boron content with respect to the aluminum alloy powder since this makes the material easier to work, and if the surface layer portion is thick, it is preferable to increase the boron content with respect to the aluminum alloy powder since this improves the neutron absorbing ability.

Additionally, during extrusion, the thickness of the surface layer portions on the sides of the plate should preferably be made thicker than the thickness of the surface layer portions on the top and bottom, since this makes it less likely for defects such as tearing of the end portions to occur during the later rolling step.

### Rolling:

The material that has been extruded as described above is hot or cold rolled and cut to predetermined lengths and widths to form rolled materials. While the rolling conditions are not particularly restricted, a plate that is 6 mm thick can be roughly rolled at a draft of about 20% at 300-400 °C, then finely rolled to a desired thickness at 150-300 °C. As a result, it can be worked to a more preferable shape, for example, to obtain a neutron absorber in the shape of a plate that is about 130-140 mm wide and about 2 mm thick. Since the weldability and heat dissipation of the surface layer portion can decrease if it is too thin, the rolling should preferably be performed such that the surface layer portion does not become less than 20 µm.

### Second Embodiment

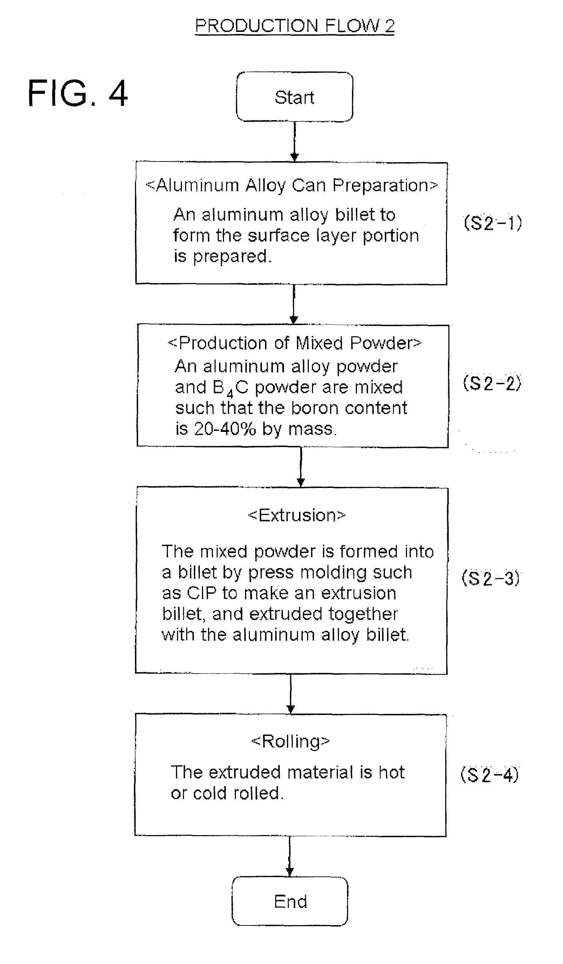

The method for producing a neutron absorber according to this embodiment is performed in accordance with the flow chart shown in Fig. 4.

### Preparation of Aluminum Alloy Material (Step S2-1):

An aluminum alloy material to form the surface layer portion is prepared in the form of a material appropriate for extrusion. The dimensions of this compact should preferably be such as to have a thickness of 10-40 mm in the form of a disc, the diameter being about the same as the mixed powder pressed compact described below.

### Production of Boron-Aluminum Mixed Powder (Step S2-2):

An aluminum alloy powder and a powder of boron or boron compound such as B₄C with at least 20% by mass and at most 40% by mass in boron content are prepared, and these powders are mixed even. The method of mixture may be a publicly known method, for example, using various types of mixers such as a V blender or cross rotary mixer, a vibrating mill, a planetary mill or the like, with a predetermined mixing time (for example, from about 10 minutes to 6 hours). Additionally, the mixing can be performed wet or dry. Additionally, media such as alumina balls or the like can be added as appropriate for the purposes of crushing during the mixing process.

### Extrusion (Step S2-3):

The resulting boron-aluminum mixed powder is formed into a billet for extrusion by means of press molding by cold pressing or CIP. CIP is preferably employed since it results in a compact that is particularly uniform and has a high mold density. The CIP molding conditions can, for example, be set to 1000-4000 kg/cm² from which a press compact with a mold density, for example, of 2.0-2.6 g/cm³ can be obtained.

Next, the press compact obtained as described above is formed into a billet for extrusion. After degassing as needed, the result may be placed in a sintering furnace to sinter. By sintering, it becomes possible to perform heating prior to extrusion by induction heating. When an Mg-Si alloy is selected as the aluminum alloy powder, sintering can be performed, for example, in a vacuum of 0.1 Torr, or in an inert gas atmosphere of argon, nitrogen or the like. The sintering temperature can be 520-580 °C, and the sintering time can be 2-8 hours.

Next, the aluminum alloy material compact prepared in step S2-1 and the powder billet obtained as described above are hot extruded by arranging the aluminum alloy material compact on the side facing the direction of extrusion (dice side), then loading the above-described sintered powder billet. During extrusion, the aluminum alloy which is extruded first acts as a lubricant to enable even a material containing high concentrations of boron or boron compound powders such as the present invention to be extruded. Here, the extruder (method) can be, for example, a direct extruder, with an extrusion speed of 0.3-5 m/minute and a heating temperature of 530-560 °C.

Due to this extrusion, the aluminum alloy material arranged on the dice side is first extruded from the dice, and the above-described powder billet is extruded afterwards, so that a extruded material with a layered structure having the aluminum alloy material positioned on the outside and the billet as a core is extruded, to form a neutron absorber, for example, with an overall thickness of about 6 mm and a surface layer thickness of about 0.1-0.5 mm.

It is preferable for the thickness to be at least 0.1 mm and the thicknesses of the surface layer portions on the sides of the plate to be thicker than the thicknesses of the surface layer portions on the top and bottom as described above.

### Rolling:

The material that has been extruded as described above is hot or cold rolled and cut to predetermined lengths and widths to form rolled materials. While the rolling conditions are not particularly restricted, a plate that is 6 mm thick can be ruoughly rolled at a draft of about 20% at 300-400 °C, then finely rolled to a desired thickness at 150-300 °C. As a result, it can be worked to a more preferable shape, for example, to obtain a neutron absorber in the shape of a plate that is about 130-140 mm wide and about 2 mm thick.

Since the neutron absorbers made in both of the above embodiments have boron or boron compound particles encased in a parent phase of aluminum alloy, they have high heat dissipating ability, and good adhesion so there is no risk of water penetrating inside. Furthermore, the surface layers are layers with low boron content, so that there are few surface defects caused by boron or boron compounds during extrusion or rolling. Additionally, the surface layers have few boron or boron compounds, and the surface layers are not powder alloys, so that they have low gas content and excel in weldability. This is a particularly advantageous characteristic when considering that the conventional boral has an interior consisting of boron compounds and is therefore difficult to weld.

### Examples

Herebelow, the present invention will be explained in further detail by means of

### examples.

The methods for measuring the physical values given in the examples are as follows:

### (1) Composition

Analyzed by ICP emission spectrometry.

### (2) Average Particle Size

Performed by laser diffraction type particle size distribution measurements using a Nikkiso "Microtrac''. The average particle size is given as a standard-volume median diameter.

### (3) Thermal Conductivity

Measured by a laser flash method.

### (5) Object Observation

A small piece cut from the extruded or rolled material was imbedded in resin, emery polished and buff polished, then the boron distribution state was observed by an optical microscope and a scanning electron microscope.

### <Conventional Example>

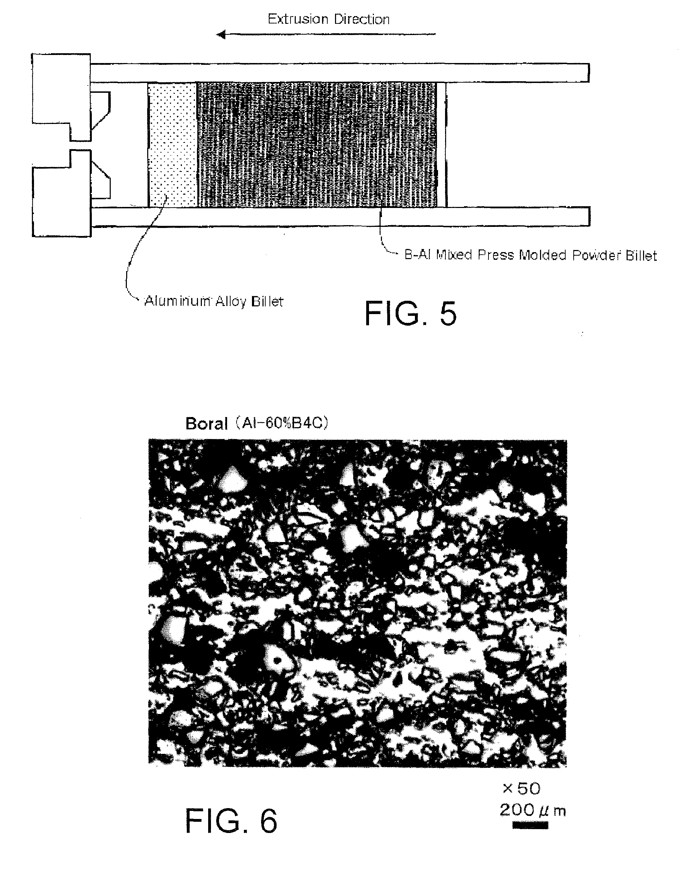

Upon measuring the thermal conductivity of a 2 mm thick boral plate having a mixed powder obtained by mixing a B₄C powder and aluminum powder at a mass ratio of 3:2 sandwiched between 0.4 mm thick pure aluminum plates, it was found to be 40 W/mK. Additionally, upon observing the state of distribution of boron, there were many gaps, and the B₄C powder was found to be unevenly dispersed (see Fig. 6). In the photo of Fig. 6, the clumped gray portions are B₄C, the white portions are aluminum, and the black portions are gaps.

### <Example 1>

Rolled materials 1-12 were prepared and evaluated as described below.
Additionally, Rolled material 13 was prepared as a comparative example, and evaluated in a similar manner.

Aluminum with the compositions shown in Table 1 was melted, the melt was held at 850 °C, the gas atomized to prepared aluminum powders with the average particle size adjusted by means of the blowing rate and gas pressure during atomization.

**Table 1**

| | (Mass%) | | | | | | | | | |
|---|---|---|---|---|---|---|---|---|---|---|
| | Cu | Fe | Si | Mn | Mg | Zn | Cr | Ti | Sm | Al |
| Al Powder A | <0.01 | 0.03 | 0.05 | <0.01 | <0.01 | <0.01 | <0.01 | <0.01 | - | Bal |
| Al Powder B | 0.01 | 0.05 | 0.09 | <0.01 | 0.02 | 0.02 | 0.01 | 0.02 | - | Bal |
| Al Powder C | 0.02 | 0.02 | 0.03 | 0.01 | 2.25 | 0.01 | <0.01 | 0.01 | - | Bal |
| Al Powder D | 0.01 | 0.05 | 0.09 | <0.01 | 0.02 | 0.02 | 0.01 | 0.02 | 17 | Bal |
| Al Powder E | 0.12 | 0.32 | 0.46 | 0.09 | 0.74 | 0.01 | 0.03 | <0.01 | - | Bal |
| Al Powder F | 0.15 | 0.33 | 0.12 | 1.21 | 1.03 | 0.15 | <0.01 | <0.01 | - | Bal |
| Al Powder G | 0.74 | 0.81 | 12.5 | 0.05 | 1.02 | 0.1 | <0.01 | 0.2 | - | Bal |

Next, the aluminum powder and boron or boron compound powder were mixed together for 1 hour using a cross rotary mixer, to prepare the mixed powders shown in Table 2.

**Table 2**

| | Al Powder | | B, B Compound Powder | | |
|---|---|---|---|---|---|
| | Type (Mass%) | Avg. Part. Size (µm) | Type Type | Avg. Part. Size (µm) | B Content (Mass%) |
| Mixed Powder (1) | A | 28.4 | B₄C | 5.5 | 22.5 |
| Mixed Powder (2) | B | 52.6 | B₄C | 7.1 | 30.0 |
| Mixed Powder (3) | C | 45.3 | B₄C | 5.5 | 22.5 |
| Mixed Powder (4) | D | 41.5 | B₄C | 5.5 | 30.0 |
| Mixed Powder (5) | E (20) | 38.7 | B₄C | 5.5 | 27.0 |
| | B (bal) | 52.6 | | | |
| Mixed Powder (6) | F810) | 49.1 | B₄C | 5.5 | 27.0 |
| | B (bal) | 52.6 | | | |
| Mixed Powder (7) | G (10) | 38.1 | B₄C | 5.5 | 27.0 |
| | B (bal) | 52.6 | | | |
| Mixed Powder (8) | B | 315 | B₄C | 25.0 | 30.0 |
| Mixed Powder (9) | B | 128 | B₄C | 18.3 | 30.0 |
| Mixed Powder (10) | B | 76.4 | B₄C | 18.3 | 30.0 |
| Mixed Powder (11) | B | 21.2 | B₄C | 2.2 | 30.0 |
| Mixed Powder (12) | B | 12.7 | B₄C | 2.2 | 30.0 |
| Mixed Powder (13) | B | 52.6 | B₄C | 7.1 | 54.0 |

The mixed powders shown in Table 2 were loaded into cans of diameter (outer diameter) 30 mm and length 100 mm, heated to 500 °C, then hot extruded at an extrusion ratio of 10, to form neutron absorbers that were 4 m thick × 20 mm wide × 300 mm long. After heating the resulting neutron absorbers to 300 °C, they were rolled to obtain rolled neutron absorbers with a thickness of 1 mm. The processing conditions, workability and thermal conductivities of the aluminum neutron absorbers 1-13 are shown in Table 3.

**Table 3**

| | Mixed Powder | Can | | Thermal Conductivity (W/mK) | Workability |
|---|---|---|---|---|---|
| | Type | Composition | Thickness (mm) | | |
| Absorber 1 | (1) | 1070 alloy | 1 | 151 | O |
| Absorber 2 | (2) | 1070 alloy | 1 | 142 | O |
| Absorber 3 | (3) | 1070 alloy | 1 | 91 | Δ |
| Absorber 4 | (4) | 1070 alloy | 1 | 121 | O |
| Absorber 5 | (5) | 1070 alloy | 3 | 132 | O |
| Absorber 6 | (6) | 1070 alloy | 3 | 123 | O |
| Absorber 7 | (7) | 1070 alloy | 3 | 121 | O |
| Absorber 8 | (8) | 1070 alloy | 1 | 112 | Δ |
| Absorber 9 | (9) | 1070 alloy | 1 | 102 | Δ |
| Absorber 10 | (10) | 1070 alloy | 1 | 107 | O |
| Absorber 11 | (11) | 1070 alloy | 1 | 99 | O |
| Absorber 12 | (12) | 3004 alloy | 1 | 92 | O |
| Absorber 13 | (13) | 1070 alloy | 1 | 56 | × |

The state of distribution of boron in the above-described neutron absorber 1 is shown in Figs. 7 and 8, and the state of distribution of boron in the neutron absorber 2 is shown in Figs. 9 and 10. The results show that the B₄C powder is very evenly dispersed in the rolled neutron absorber of the present invention.

Additionally, it can be seen that the absorbers 1-12 which are examples of the present invention have better thermal conductivity and workability than boral which is a conventional example or absorber 13 which is a comparative example. Furthermore, it can be seen that among the examples of the present invention, the comparative examples 8 and 9 which have large average particle sizes for the aluminum powder and comparative example 3 in which the aluminum powder is an Al-Mg alloy have slightly poorer workability.

### <Example 2>

In order to improve the extrusion properties, the differences in extrusion properties were studied by changing the average particle sizes of the aluminum powder and B₄C powder. As the absorbers used for extrusion, those wherein a CIP material has been placed in an aluminum can were used. Additionally, the billet heating temperature was 500 °C and the dice and container were 400 °C.

The composition of the aluminum-boron compound mixed powder used in the molding of the body of the absorber was Al-35%B₄C, and the average particle sizes of the aluminum powder and B₄C powder were as shown in the following table.

**Table 4**

| Sample | Aluminum Powder | B₄C Powder |
|---|---|---|
| Extrusion Material (1) | 29 µm | 5 µm |
| Extrusion Material (2) | 29 µm | 10 µm |
| Extrusion Material (3) | 84 µm | 5 µm |
| Extrusion Material (4) | 84 µm | 10 µm |

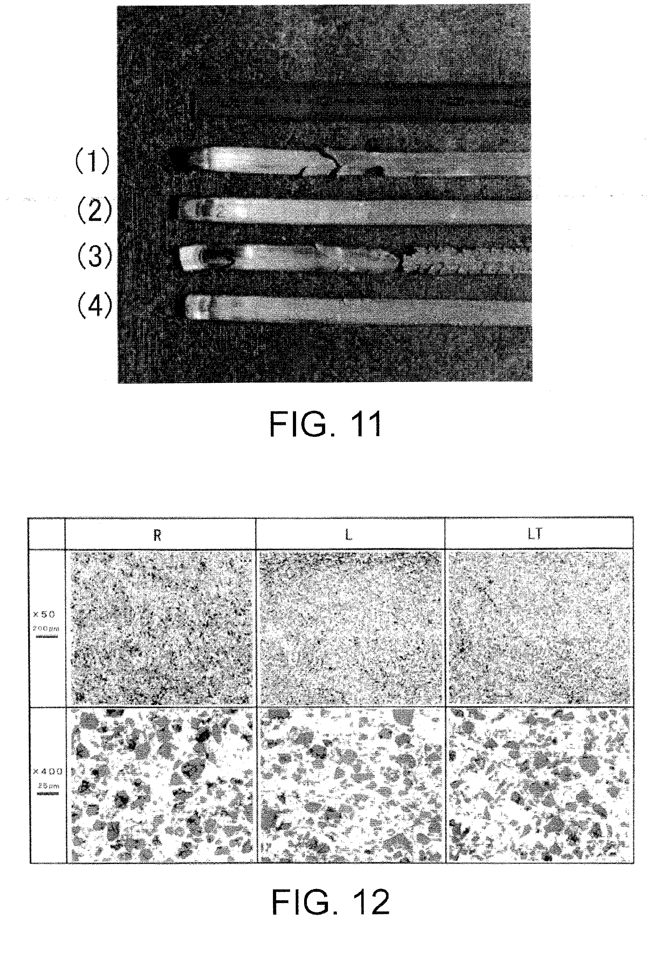

The test results are shown in Fig. 11. Good extrusion results were obtained with the extrusion materials (1)-(2) using fine aluminum powders, but tearing occurred with the extrusion materials (3)-(4) using coarse aluminum powders. This is believed to be due to the fact that the gaps in the aluminum powders are reduced, making the B₄C more likely to clump together.

From the above, it was discovered that better extrusion properties can be obtained by using a coarse B₄C powder with a fine aluminum powder.

### <Example 3>

A 215 w × 6 mm t aluminum-based neutron absorber extruded with the same composition as Example 2 was further rolled to obtain a rolled material that was 222 w × 2.4 mm t. Various analyses were performed on the resulting rolled material. The results are shown below.

### (1) Elemental Analysis

In order to confirm the even dispersion of boron in the rolled material, the boron content was measured at the left edge, center and right edge of the rolled material in a lateral direction. The results were as shown in the following table, from which it is possible to infer that the boron is evenly dispersed.

**Table 5 Units: % (m/m)**

| Analyzed Element | | | |
|---|---|---|---|
| | Left Edge | Center | Right Edge |
| B | 27.2 | 27.6 | 27.4 |
| B₄C | 34.8 | 35.2 | 35.0 |

### (2) Microscopic Observation

Cross sections were cut from the left edge, center and right edge of the above rolled material, and the state of distribution of the B₄C particles was observed in a microscope. The results are shown in Figs. 12-14. The results show that the B₄C particles are very evenly dispersed.

### (3) Neutron Transmission Test

In addition to the neutron absorber rolled material of the present invention, boral was prepared as a comparative example, and the neutron transmission and area densities of boron were measured for each sample.

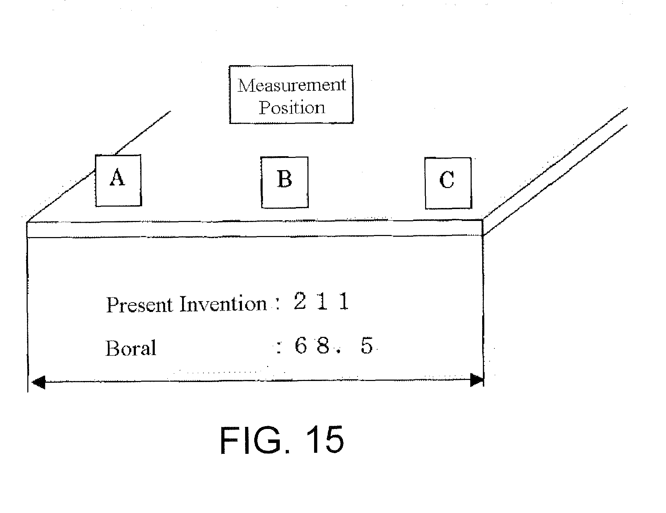

The results of the analysis are shown in Table 6. Additionally, Table 7 shows the plate thicknesses for the samples used in the measurements. Fig. 15 shows the measuring positions.

Table 6 shows that the neutron absorber rolled material according to the example of the present invention has about the same neutron transmission rate as boral.

**Table 6**

| Sample | Neutron Transmission | Boron Area Density (mg/cm²) |
|---|---|---|
| Present Invention | 14.1% | 1.23 × 10² |
| Boral | 11.2% | 1.78 × 10² |

**Table 7**

| Material | Overall Thickness mm | | | Sheath Thickness |
|---|---|---|---|---|
| | A | B | C | mm |
| Present Invention | 1.91 | 1.90 | 1.92 | 0.1-0.2 |
| Boral | 1.97 | 1.98 | 1.98 | 0.5 |

### (4) Neutron Radiography Test

Neutron radiography was performed on the neutron absorbing rolled material of the present invention under the following conditions.
- Accelerated particles:: protons 18 MeV
- Direction of illumination:: vertical direction
- Converter:: Gd converter
- Film:: Kodak SR45

Additionally, boral was prepared as a comparative example, and neutron radiography was performed under the same conditions.

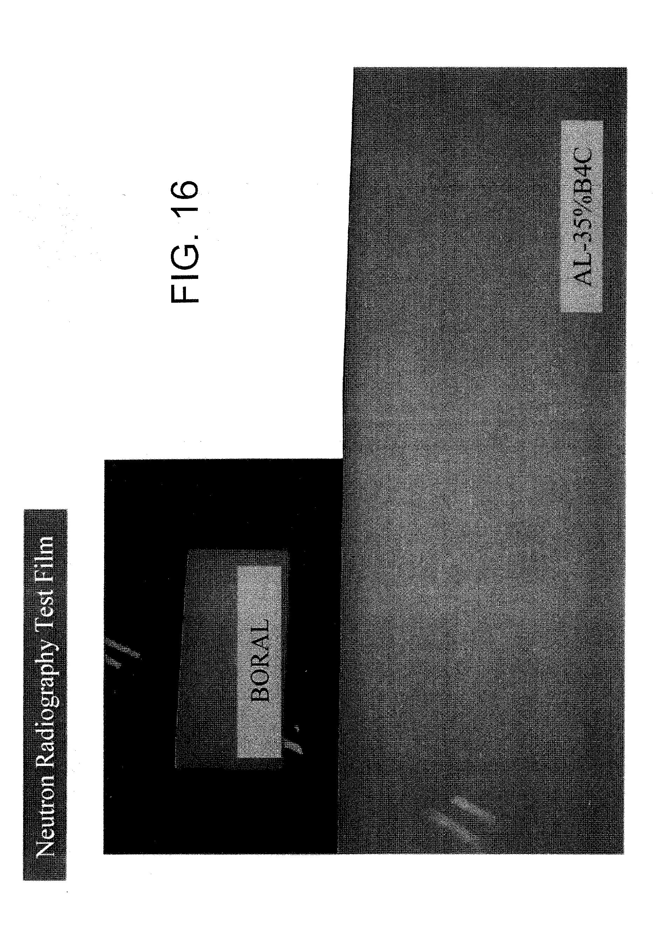

The results are shown in Fig. 16. The results did not show any particular differences in the contrast or film concentration.

From the above, it was confirmed that the neutron absorber of the present invention has exceptional neutron blocking effects and workability.

### Industrial Applicability

The aluminum-based neutron absorber according to the present invention can be applied to a storage container for spent nuclear fuel (storage casks for spent nuclear fuel). Additionally, it can be used for peripheral parts of nuclear reactors, medical radiology devices and other apparatus having a radiation source, nuclear shelters or ships and the like.

### BRIEF DESCRIPTION OF THE DRAWINGS

Fig. 1: A perspective section view showing an example of a neutron absorber according to the present invention.
Fig. 2: A flow chart showing an embodiment of the neutron absorber manufacturing process of the present invention.
Fig. 3: A schematic showing the extrusion process in the manufacturing process of Fig. 1.
Fig. 4: A flow chart showing another embodiment of the neutron absorber manufacturing process of the present invention.
Fig. 5: A schematic showing the extrusion process in the manufacturing process of Fig. 4.
Fig. 6: A diagram showing a photograph of a conventional example taken with an optical microscope.

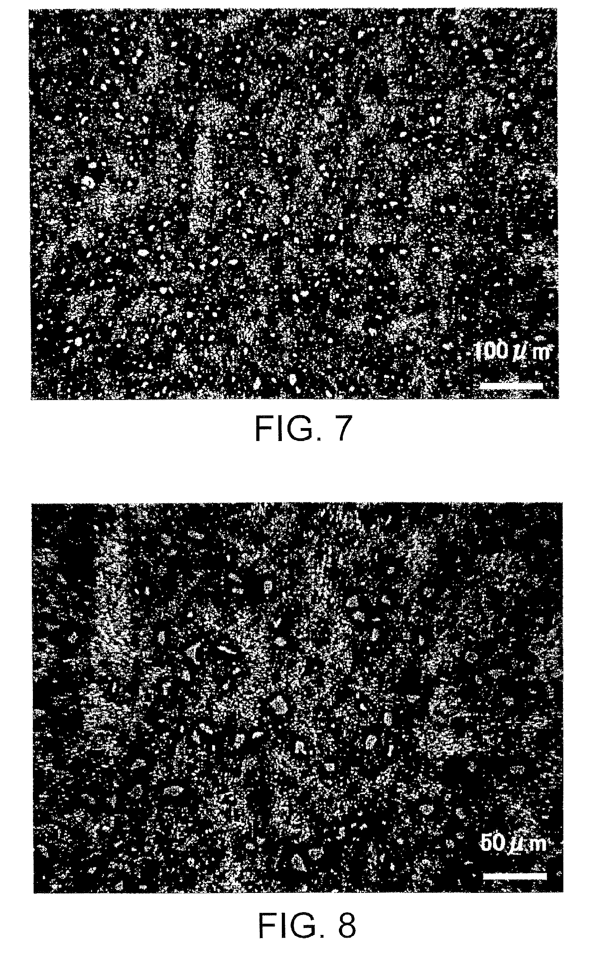

Fig. 7: A diagram showing a photograph of a cross section of the neutron absorber 11 of Example 1 taken with an optical microscope.
Fig. 8: A diagram showing a photograph similar to Fig. 7 with the resolution of the optical microscope changed.

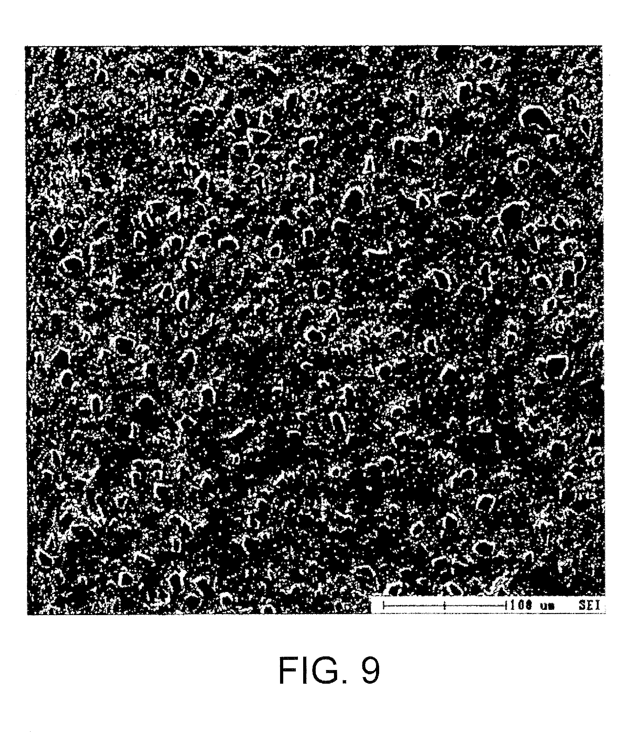

Fig. 9: A diagram showing a photograph of a cross section of the neutron absorber 2 of Example 1 taken with a scanning electron microscope.

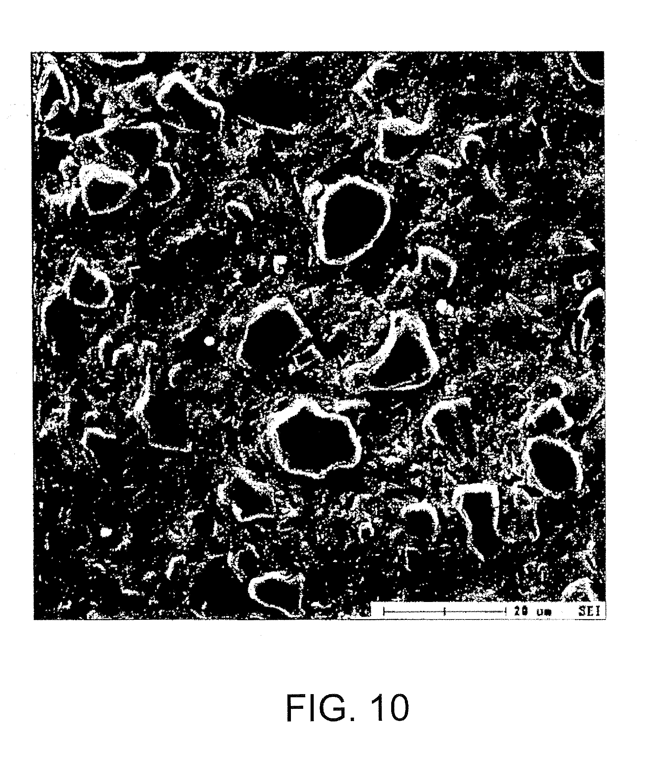

Fig. 10: A diagram showing a photograph similar to Fig. 9 with the resolution of the optical microscope changed.
Fig. 11: A photograph showing the extrusion properties of extrusion materials (1)-(4) in Example 2.

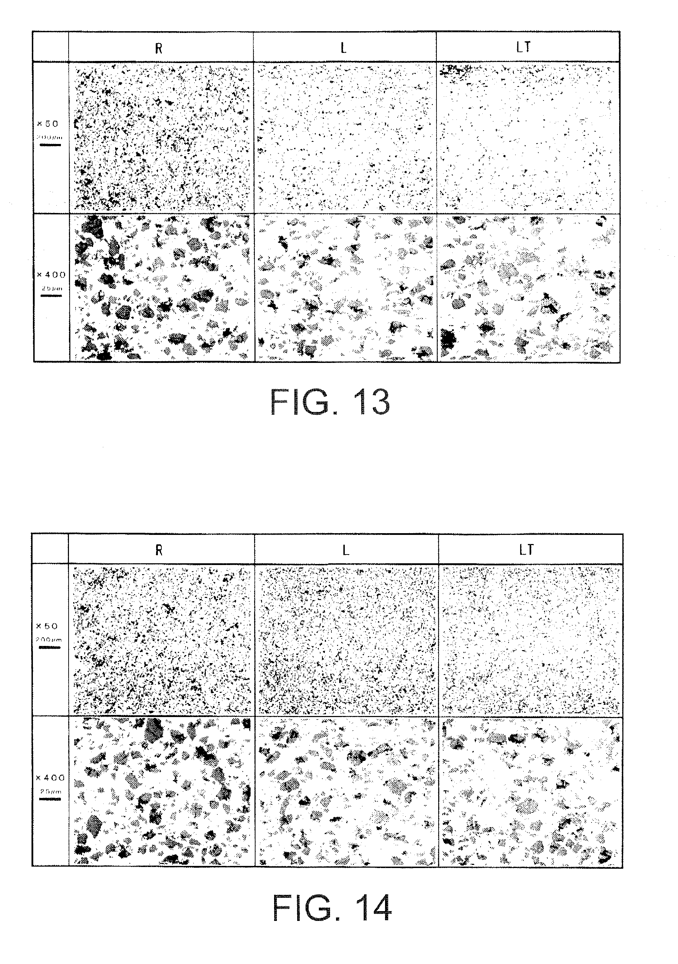

Fig. 12: A diagram showing a photograph of a left edge portion of the neutron absorber rolled material of Example 3 taken with an optical microscope. In the diagram, L denotes the cross section when cut in a direction parallel to the rolling direction, LT denotes the cross section when cut in a direction perpendicular to the rolling direction, and R denotes the cross section when cut in half in the thickness direction (the same apples to Figs. 13-14 below).
Fig. 13: A diagram showing a photograph of a central portion of the neutron absorber rolled material of Example 3 taken with an optical microscope.
Fig. 14: A diagram showing a photograph of a right edge portion of the neutron absorber rolled material of Example 3 taken with an optical microscope.
Fig. 15: A diagram showing the parts of a neutron absorber according to Example 3 undergoing a thickness measurement.
Fig. 16: A diagram showing a neutron radiography test of a neutron absorber according to Example 3.

## Claims

1. An aluminum-based extruded neutron absorber comprising a body portion consisting of an aluminum alloy containing boron or a boron compound including isotopes having the ability to absorb neutrons at a boron content of 20-40% by mass; and a surface layer portion covering said body portion, consisting of an aluminum alloy whose boron content is 1% by mass or less.

2. A neutron absorber in accordance with claim 1, wherein said surface layer portion is at least 0.1 mm thick.

3. A neutron absorber in accordance with either claim 1 or 2, wherein said neutron absorber is plate-shaped, and the thickness of the surface layer portion on the sides of the plate is greater than the thickness of the surface layer portion on the top and bottom of the plate.

4. A neutron absorber in accordance with any one of claims 1-3, wherein the aluminum alloy of said body portion further comprises at least one element chosen from the group consisting of silicon, magnesium, iron, copper, manganese, chromium, titanium, nickel, vanadium, cobalt, molybdenum, niobium, zirconium, strontium and zinc, in addition to said boron or boron compound.

5. A neutron absorber in accordance with any one of claims 1-4, wherein the aluminum alloy of said surface layer portion further comprises at least one element chosen from the group consisting of silicon, magnesium, iron, copper, manganese, chromium, titanium, nickel, vanadium, cobalt, molybdenum, niobium, zirconium, strontium and zinc.

6. A neutron absorber in accordance with any one of claims 1-5, wherein the boron content of said surface layer portion is 100 ppm or less.

7. A neutron absorber in accordance with any one of claims 1-6, wherein said boron compound is B₄C.

8. A neutron absorber obtained by rolling a neutron absorber in accordance with any one of claims 1-7.

9. A basket for accommodating spent nuclear fuel, wherein wall portions forming a space for accommodating said nuclear fuel is formed from an aluminum-based neutron absorber in accordance with any one of claims 1-8.

10. A method of producing an aluminum-based neutron absorber containing boron or a boron compound including isotopes having the ability to absorb neutrons, comprising:
(a) a step of preparing an aluminum alloy material whose boron content is 1% by mass or less;
(b) a step of mixing a powder of said boron or boron compound with an aluminum alloy powder such as to make the boron content 20-40% by mass to produce a boron-aluminum mixed powder; and
(c) a step of extruding said aluminum alloy material and said boron-aluminum mixed powder to form an aluminum-based neutron absorber comprising a body portion consisting of boron-aluminum and a surface layer portion of aluminum alloy covering said body portion.

11. A production method in accordance with claim 10, wherein said aluminum alloy material is an aluminum alloy container, and said step (c) is a step of filling said aluminum alloy container with said boron-aluminum powder to form a preliminary compact, then extruding said preliminary compact to form an aluminum-based neutron absorber.

12. A production method in accordance with claim 10, wherein said step (c) comprises:
a step of cold isostatic pressing or cold pressing said boron-aluminum mixed powder to form a pressed compact; and
a step of arranging said aluminum alloy material and said boron-aluminum powder compact in order in the direction of extrusion, and extruding.

13. A production method in accordance with any one of claims 10-12, further comprising (d) a step of rolling the extruded aluminum-based neutron absorber.

14. A production method in accordance with any one of claims 10-13, wherein said step (b) is a step of mixing a powder of boron or a boron compound having an average particle size in the range of 3-30 µm with an aluminum alloy powder having an average particle size in the range of 20-50 µm to produce said boron-aluminum mixed powder.

## Amended claims

Statement under Art. 19.1 PCT
1. An aluminum-based extruded neutron absorber comprising a body portion consisting of an aluminum alloy containing boron or a boron compound including isotopes having the ability to absorb neutrons at a boron content of 20-40% by mass; and a surface layer portion covering said body portion, consisting of an aluminum alloy whose boron content is 1 % by mass or less; the aluminum alloy of said body portion being obtained from a mixed powder of boron or a boron compound with an average particle size in the range of 3-30 µm and an aluminum alloy powder with an average particle size in the range of 20-500 µm.

2. A neutron absorber in accordance with claim 1, wherein said surface layer portion is at least 0.1 mm thick.

3. A neutron absorber in accordance with either claim 1 or 2, wherein said neutron absorber is plate-shaped, and the thickness of the surface layer portion on the sides of the plate is greater than the thickness of the surface layer portion on the top and bottom of the plate.

4. A neutron absorber in accordance with any one of claims 1-3, wherein the aluminum alloy of said body portion further comprises at least one element chosen from the group consisting of silicon, magnesium, iron, copper, manganese, chromium, titanium, nickel, vanadium, cobalt, molybdenum, niobium, zirconium, strontium and zinc, in addition to said boron or boron compound.

5. A neutron absorber in accordance with any one of claims 1-4, wherein the aluminum alloy of said surface layer portion further comprises at least one element chosen from the group consisting of silicon, magnesium, iron, copper, manganese, chromium, titanium, nickel, vanadium, cobalt, molybdenum, niobium, zirconium, strontium and zinc.

6. A neutron absorber in accordance with any one of claims 1-5, wherein the boron content of said surface layer portion is 100 ppm or less.

7. A neutron absorber in accordance with any one of claims 1-6, wherein said boron compound is B₄C.

8. A neutron absorber obtained by rolling a neutron absorber in accordance with any one of claims 1-7.

9. A basket for accommodating spent nuclear fuel, wherein wall portions forming a space for accommodating said nuclear fuel is formed from an aluminum-based neutron absorber in accordance with any one of claims 1-8.

10. A method of producing an aluminum-based neutron absorber containing boron or a boron compound including isotopes having the ability to absorb neutrons, comprising:
(a) a step of preparing an aluminum alloy material whose boron content is 1% by mass or less;
(b) a step of mixing a powder of said boron or boron compound having an average particle size in the range of 3-30 µm with an aluminum alloy powder having an average particle size in the range of 20-500 µm such as to make the boron content 20-40% by mass to produce a boron-aluminum mixed powder; and
(c) a step of extruding said aluminum alloy material and said boron-aluminum mixed powder to form an aluminum-based neutron absorber comprising a body portion consisting of boron-aluminum and a surface layer portion of aluminum alloy covering said body portion.

11. A production method in accordance with claim 10, wherein said aluminum alloy material is an aluminum alloy container, and said step (c) is a step of filling said aluminum alloy container with said boron-aluminum powder to form a preliminary compact, then extruding said preliminary compact to form an aluminum-based neutron absorber.

12. A production method in accordance with claim 10, wherein said step (c) comprises:
a step of cold isostatic pressing or cold pressing said boron-aluminum mixed powder to form a pressed compact; and
a step of arranging said aluminum alloy material and said boron-aluminum powder compact in order in the direction of extrusion, and extruding.

13. A production method in accordance with any one of claims 10-12, further comprising (d) a step of rolling the extruded aluminum-based neutron absorber.
